# EUROPEAN PATENT APPLICATION

(11) **EP 2 283 729 A1**
(43) Date of publication of application: **16.02.2011**
(21) Application number: 09010428.2
(22) Date of filing: 13.08.2009
(51) Int. Cl.: A21B 3/04, F24C 15/20

(54) **Processing chamber, device for household and industrial application and sorption cartridge**

(71) Applicant: Electrolux Home Products Corporation N.V., 1930 Zaventem (BE)
(72) Inventor: Reinhard-Herrscher, Fabienne, 74592 Kirchberg / Jagst (DE); Kaiser, Kersten, 91541 Rothenburg o.d. Tauber (DE); Leidig, Karl, Dr., 91610 Insingen (DE); Ruther, Florian, 91328 Steinsfeld (DE)
(74) Representative: Hochmuth, Jürgen

(57) **Abstract**

The invention is in particular directed to a processing chamber (1) of a household cooking oven. For dehumidification of ambient air, a sorption cartridge (2) is provided which is arranged inside the processing chamber (1).

## Description

The invention in particular relates to a processing chamber for processing foodstuff therein via thermal treatment.

Such processing chambers are for example known with baking (or: cooking) ovens and are also called muffles in this connection. With many cooking and baking processes of foodstuff a steamy atmosphere is generated within the muffle. Hot steam may escape from muffle while opening the same during or at the end of the baking process, which may be dangerous for the operator to be scalded. Further, it is generally not desirable to exhaust considerable amounts of steam generated during baking to the environment, as steam and constituents like fat condense to walls, furniture and other objects.

It has therefore been proposed in US 6 096 357, to release the steam in a more gentle and controlled way before allowing for opening the door. Another solution according to EP 0 634 612 A1 is to provide a condenser for waste steam, arranged within the casing of the baking oven above the muffle and communicating with the muffle via a duct. Besides this, DE 2005 063 214 A1 proposes a solution in which waste steam is fed to a cooling unit for condensing moisture. Dehumidifying waste steam can also be achieved according to DE 36 26 887, in which waste steam is withdrawn from the muffle, feed to a dehumidification system arranged beneath the muffle and finally lead back into the muffle via a duct system.

It is an object of the invention to provide an alternative processing chamber suitable for dehumidification of waste steam, particularly aiming at low production costs, satisfactory dehumidification results and easy implementation and maintenance. Further, it is an object to provide a device for household and industrial application and a sorption cartridge. This object is solved by claims 1, 14 and 15. Embodiments of the invention result from dependent claims 2 to 13.

A first aspect of the invention is directed to a processing chamber for processing foodstuff and the like via thermal treatment. Such a processing chamber may be - but not restricted to - a muffle of a cooking appliance for household and industrial, respectively.

Note that in the following the term "processing chamber" will - unless otherwise stated - be abbreviated by "chamber", for convenience.

The chamber comprises a sorption cartridge. The sorption cartridge is arranged within, i.e. inside, the processing chamber. The sorption cartridge is designed for at least dehumidification of waste steam generated during a thermal treatment process, such as cooking including baking and the like. The sorption cartridge may be one of fixedly and exchangeably arranged within the chamber.

The sorption cartridge arranged within the chamber is easily accessible and therefore allows for easy maintenance. Further, such an arrangement makes it possible to easily retrofit common cooking chambers. An additional advantage may be that moisture containing ambient air within the chamber can be directly fed to the sorption cartridge, avoiding additional ducts and related systems. Hence a comparatively compact solution can be provided at low costs. The sorption cartridge may also be beneficial for at least one of effectively controlling the humidity inside the chamber, supporting food drying if needed, de-steaming the chamber after baking or cooking and steaming, if used in connection with a steam cooker, cooling down food to serving, room or fridge temperatures. This may lead amongst others to better food quality, time saving, energy saving and, by avoiding hot steam being released from the chamber while opening the same, more comfortable and user-friendly operation.

As can readily be seen, the processing chamber according to the first aspect by far meets the objects of the invention. Further advantages result from embodiments described below.

For effectively adsorbing at least moisture, i.e. for effective dehumidification, the sorption cartridge may contain a micro porous hygroscopic sorption agent, such as zeolite. However, any other suitable sorption agent may be selected. Note that energy saving can be obtained in that thermal energy is set free with some sorption agents, in particular zeolite, while adsorbing moisture, for example. That is, respective adsorption processes are of exothermic type. Thermal energy generated in this way can be returned to dehumidified ambient air, for example, thereby saving energy needed for the thermal treatment.

The sorption agent may be contained in a first compartment of the sorption cartridge. The first compartment may be of box-like design and adapted to prevent leakage of sorption agent while assuring adequate accessibility of ambient air to the sorption agent. Provision of the first compartment may be useful to separate the sorption agent from other components received within the sorption cartridge. A second compartment may be provided such that ambient air exiting from the first compartment passes through the second compartment while absorbing exothermic sorption energy. Such an arrangement makes it possible to effectively use energy generated by sorption processes, thereby saving energy needed for thermal treatment, i.e. heating ambient air. The second compartment may for example surround the first compartment such that ambient air exits the first compartment into the second compartment. In some instances, for example for lowering or preventing heat exchange via compartment walls, it may be advantageous to encase at least the first and second compartments by a thermal insulation material.

The term "ambient air" shall be understood to constitute the working fluid used for transporting substances to be adsorbed to the sorption agent, even if a working fluid other than air which is generally used with cooking ovens is used. The term "ambient" indicates that the object of interest is air within the processing chamber.

Apart from the possibility of providing compartment walls permeable for at least moisture, it is possible to provide a compartment wall with at least one opening for guiding through or at least enabling passage of ambient air. Such an opening may enhance the throughput of ambient air and may therefore be adapted to respective dehumidification power needed, for example. In the case of a second compartment being provided, the first compartment can comprise an inlet opening for guiding ambient air to the sorption agent and an outlet opening for guiding ambient air to the second compartment. The second compartment may also comprise an inlet opening connected to the outlet opening of the first compartment. Note that an inlet opening of the second compartment can be dispensed with if the second compartment surrounds the compartment, for example. The second compartment may also comprise an outlet opening which is opening into the processing chamber and exhausting ambient air preheated via exothermic sorption energy into the processing chamber. Adaption of ambient air throughput may be facilitated by providing a valve adapted to block or enable communication of a respective opening with the processing chamber. Blocking communication will disable dehumidification and the like via the opening. Enabling communication, i.e. at least partially opening the valve, will enable dehumidification according to the degree of opening the valve. If communication exclusively takes place via one or more openings, the dehumidification power can be easily controlled and adapted to respective, in particular instantaneous, needs.

Dehumidification and absorption of exothermic energy, respectively, may be enhanced by providing an inner duct system within at least one of the first and second compartment, respectively. The duct system is designed for predefinedly guiding ambient air through the respective compartment. Thereby it is possible to utilize a maximum volume of the sorption agent or heat exchange surface. Therefore, enhanced sorption processes, increased sorption capacity and energy saving can be obtained. The duct system and the openings may be specially adapted to enable, facilitate or maintain the flow through of ambient air.

Guiding ambient air through the sorption agent can also be or alternatively be achieved by providing at least one of pumps and fans. Here it may for example be thought of providing pumps or fans for circulating ambient air within the processing chamber, in turn favouring guidance of ambient air through the sorption agent. Further, the cartridge itself can be equipped with pumps or fans for generating a flow of ambient air through the sorption agent. In the latter case, the pumps or fans can cooperate with the openings to feed or suck ambient air into and out of the sorption cartridge or first and second compartments. Note that by using pumps or fans cooperating with the openings effects similar to those of the valves, i.e. blocking or enabling communication, can be achieved.

For preventing substances detrimental to the sorption agent, a filter device for filtering ambient air at least prior to passing the sorption agent can be provided. However, it is also possible to provide filters acting on ambient air leaving the sorption cartridge.

In order to facilitate regeneration of the sorption agent, a heating element for heating the sorption agent can be provided within the sorption cartridge. Preferably the heating element is arranged outside but nearby the first compartment to prevent direct interaction with the sorption agent while assuring effective heat transfer during regeneration.

It may be considered to observe physical parameters such as temperature, humidity, and pressure. Therefore, the processing chamber may comprise at least one of a temperature, humidity and pressure sensor, respectively, arranged at least one of within the sorption cartridge, the first compartment, and the second compartment, respectively. Parameters obtained by means of one or more of the aforementioned sensors can be used to monitor or even control the sorption process. The latter may be achieved by controlling the valves, pumps and fans, respectively, dependent on the parameters obtained. The sorption cartridge may contain a signal processing unit. It is also possible to provide a signal processing unit distant from the sorption cartridge, for example, to prevent the signal processing unit from overheating during a thermal treatment process of foodstuff or regeneration of the sorption agent. Communication between the sensors and the signal processing unit may be of wireless or wire bound type. Information obtained from the sensors can be used for monitoring or controlling the thermal treatment process.

For easy installation and replacement, it is of particular advantage if the processing chamber comprises a carrier mechanism, a slide-in mechanism for example, for exchangeably holding the sorption cartridge. The carrier mechanism may be provided at a side wall, at the bottom or top side of the processing chamber. It may even be thought of providing the carrier mechanism at a door of the processing chamber. In the latter case, the sorption cartridge will be arranged within the processing chamber whenever the door is closed, which shall be understood to be within the scope of the invention. The relevant aspect is that the sorption cartridge will be within the chamber during normal operation, i.e. during thermal treatment processes.

The carrier mechanism advantageously comprises a connector interface, comprising at least one connector interacting with at least one counterpart connector of the sorption cartridge. The connector interface is designed for at least one of mechanical interaction, i.e. interaction with the carrier mechanism, and unidirectionally or bidirectionally transfer at least one of, but not restricted to, ambient air, energy, sensor electric signals and control signals.

The connector interface can provide a variety of additional advantageous. A mechanical interaction between a respective connector and a complementary counterpart connector can be used to guide the sorption cartridge while inserting or removing the same into and from the carrier mechanism. Further it is possible to adapt the connectors and counterpart connectors to lock the sorption cartridge in the inserted state, via a latch mechanism for example, which is of particular advantage in connection with a slide-in solution.

The connectors may not only be of mechanical type, but may be of electrical type making possible a transmission of electric power, electric signals and the like. For example, connectors of electrical type allow for transmission of at least one of electric power needed for powering the heating element, sensor electric signals, control signals for controlling the thermal treatment process, control signals for controlling the sorption process. The connector interface may comply with a preset standard in order to interchangeably use the sorption cartridge with different devices and different types of devices as well. Finally, the connector interface may provide junctions adapted for communication with the opening or openings of the sorption cartridge. In this case, intake ducts for sucking ambient air from the processing chamber and outlet ducts for exhausting ambient air into the processing chamber can be freely arranged without being restricted to the location and geometry of the sorption cartridge. Ambient air in this case may be guided from the inlet duct via a duct pathway to the connector interface and hence to the sorption agent and after passing the sorption agent via a further duct pathway to the outlet duct. The duct pathways in this case may advantageously be arranged outside the processing chamber. Note that the inlet duct and outlet duct can be arranged in such a way that a favorable circulation of ambient air within the processing chamber is established.

A further aspect of the invention is directed to a device for household and industrial application, respectively, comprising a processing chamber according to the first aspect of the invention. The device may constitute an oven, in particular a cooking oven or other similar devices.

A third aspect of the invention is directed to a sorption cartridge comprising a sorption agent accommodated therein and comprising at least one counterpart connector adapted for interacting with the connector interface.

Advantages and advantageous effects of the second and third aspect of the invention immediately become obvious from the details given in connection with the first and second aspect of the invention.

Embodiments of the invention will now be described in connection with the accompanying figures, in which
- Fig. 1: shows a muffle of a cooking oven comprising a sorption cartridge;
- Fig. 2: shows a longitudinal section of the sorption cartridge of Fig. 1; and
- Fig. 3: shows a longitudinal section of an embodiment of the sorption cartridge.

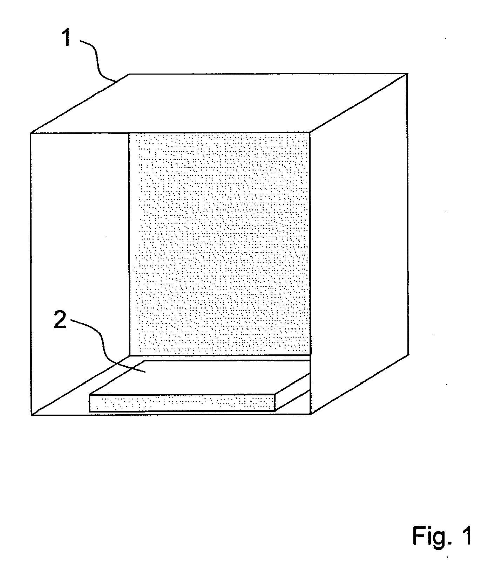

Fig. 1 shows a muffle 1 of a cooking oven, the muffle represents a processing chamber according to the first aspect of the invention. The muffle 1 comprises a sorption cartridge 2 exchangeably arranged within the muffle via an easy to operate slide-in mechanism (not shown) for sliding in and out the sorption cartridge via slide rails, for example.

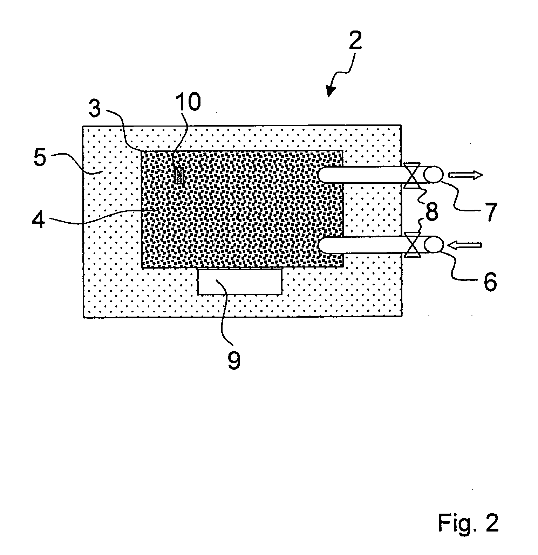

The operation of the sorption cartridge 2 is described in more detail with reference to Fig. 2 showing a longitudinal section thereof. The sorption cartridge 2 has a first compartment 3 filled with zeolite sorption agent 4. The first compartment 3 is surrounded by thermal insulation material 5 reducing heat dissipation from the first compartment 3. The first compartment 3 comprises an inlet opening 6 and an outlet opening 7. The inlet 6 and outlet opening 7 each comprise a valve 8. A heating element 9 is arranged outside and in thermal contact with the first compartment 3.

During cooking, steam and moisture escaping from the product to be baked is generated within the muffle 1, leading to a rise in humidity of ambient air confined within the muffle 1 during cooking. Such a rise in humidity is in many cases not desirable for reasons of food quality and operational comfort. For this reason, the sorption cartridge 2 is provided for dehumidification of the ambient air.

A flow of ambient air, which is indicated by arrows in Fig. 2, is generated by means of pumps or fans (not shown). Starting from the inlet opening 6, ambient air is guided via the zeolite sorption agent 4 to the outlet opening 7. In this way, moisture containing ambient air is fed to the zeolite sorption agent 4. Moisture is adsorbed while passing the zeolite sorption agent 4 resulting in dehumidified ambient air. The moisture adsorption process of zeolite sorption agent 4 is of exothermic type and thermal energy is generated accordingly. The thermal energy is returned to the dehumidified ambient air circulating in the first compartment 3, thereby additionally heating ambient air which is finally returned via outlet valve 4 into the muffle 1. As can be seen, a twofold process, i.e. dehydration and heating, occurs in the first compartment 3.

The flow of ambient air can be adjusted via valves 8. During dehumidification both valves are opened according to respective needs, in particular to desired sorption power. Adjustment of the valves can be accomplished manually, for example. However, it is possible to automatically adjust the status of the valves 8. This can for example be achieved by providing temperature, humidity and pressure sensors schematically shown and denoted with reference sign 10. Signals of the sensors 10 can be transmitted by wireless or wire bound communication to a signal processing unit (not shown). Using the signal processing unit, which may be arranged within the sorption cartridge 2 or outside the muffle 1, relevant parameters representative of the sorption process can be obtained. For example, sorption efficiency, i.e. degree of dehumidification, return of exothermic energy and the like can be monitored. Such information can be used to automatically adjust the valve state to adapt sorption power. Information extracted from the sensors 10 can be used for any other purposes, even for controlling the overall course of cooking a food product.

Besides, the sorption capacity can be evaluated. If sorption capacity reaches a low level, regeneration of the zeolite sorption agent 4 may be necessary. The operation of the sorption cartridge 2 during regeneration is as follows. In a first step, the valve 8 of the inlet opening is closed, in order to prevent moisture containing ambient air from entering the first compartment 3. In a second step the heating element 9 arranged outside the first compartment 3 and in thermal contact with the first compartment 3 is activated while valve 8 of the outlet opening 7 is in the open state. Heating the zeolite sorption agent 4 causes moisture adsorbed thereto to exit the first compartment 3 via the outlet opening 7. If the moisture content reaches a predefined lower level, for example, but also at any time prior to that point of time, the regeneration process can be stopped by deactivating the heating element 9. The sensors 10 may be used for evaluating the moisture content during regeneration.

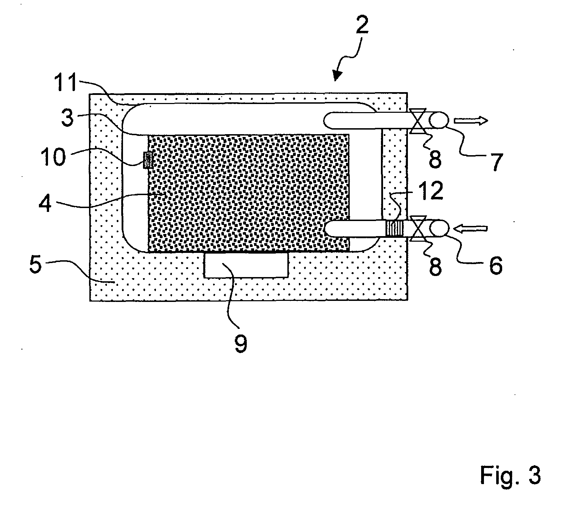

Fig. 3 shows a longitudinal section of an embodiment of the sorption cartridge 2. Note that like elements are designated by like reference signs. Further, the embodiment is described only insofar as differences are relevant for operation of the sorption cartridge 2. Compared to the sorption cartridge of Fig. 2, the one according to Fig. 3 comprises a second compartment 11.

The second compartment 11 surrounds the first compartment 3 in such a way that the flow of ambient air is as follows. Ambient air enters via inlet opening 6 into the first compartment 3 and passes the zeolite sorption agent 4. After having passed the zeolite sorption agent 4, the ambient air enters the second compartment 11 and will, after having passed the same, be exhausted via outlet opening 7 into the muffle 1. As can be seen, the retention period and flow pathway of ambient air inside the sorption cartridge 2 can extended thereby enhancing exchange of sorption exothermic energy between zeolite sorption agent 4 and ambient air. By improving heat exchange, energy can more effectively be returned and hence energy saving can be optimized. In view of optimal absorbing sorption thermal energy it is of advantage if the flow of ambient air in the first 3 and second compartment 11 at least partially is of counter flow type.

For further enhancing absorption of sorption energy, but also for improving sorption efficiency, the first 3 and second first compartments 11 may comprise inner duct systems for guiding through ambient air in a predefined manner. Such duct systems may increase the overall retention time of ambient air within the sorption cartridge 2.

As exclusively shown in Fig. 3, the sorption cartridge 2 may comprise a filter element 12 for filtering ambient air prior to passing the zeolite sorption agent 4. Such a filter element 12 can prevent the zeolite sorption agent 4 from being polluted with substances discharged within the muffle 1 during cooking. In the present case, the filter element 12 is exemplarily arranged in the inlet opening 6, but any other suitable arrangement is conceivable.

As can be seen form the foregoing description, the objects of the invention are achieved. The invention has been described in connection with a muffle 1 of a cooking oven. It is pointed out that this shall not limit the scope of the invention. Rather, the invention can be applied to devices other than cooking ovens.

### List of reference signs

- 1: muffle
- 2: sorption cartridge
- 3: first compartment
- 4: zeolite sorption agent
- 5: thermal insulation material
- 6: inlet opening
- 7: outlet opening
- 8: valve
- 9: heating element
- 10: sensors
- 11: second compartment
- 12: filter element

## Claims

1. Processing chamber (1) for processing foodstuff therein via thermal treatment, comprising a sorption cartridge (2) arranged within the processing chamber (1).

2. Processing chamber (1) according to claim 1, constituting a muffle (1) of a cooking oven or steam cooker of household and industrial application, respectively.

3. Processing chamber (1) according to at least one of claims 1 and 2, a micro porous hygroscopic sorption agent (4), preferably zeolite, being received within the sorption cartridge (2).

4. Processing chamber (1) according to at least one of claims 1 to 3, the sorption cartridge (2) comprising a first compartment (3) containing the sorption agent (4), the first compartment (3) preferably being encased by a thermal insulation material (5).

5. Processing chamber (1) according to claim 4, the sorption cartridge (2) comprising a second compartment (11) such that ambient air exiting from the first compartment (3) passes through the second compartment (11) while absorbing exothermic energy generated by sorption processes.

6. Processing chamber (1) according to at least one of claims 4 and 5, the first (3) and second compartment (11) having at least one opening (6, 7) for guiding through or enabling passage of ambient air, preferably the at least one opening (6, 7) respectively comprising a valve (8) adapted to block or enable communication with the processing chamber (1).

7. Processing chamber (1) according to at least one of claims 4 to 6, at least one of the first (3) and second compartment (11) comprising an inner duct system for predefinedly guiding through ambient air.

8. Processing chamber (1) according to at least one of claims 1 to 7, further comprising at least one of pumps and fans for guiding ambient air through the sorption cartridge (2).

9. Processing chamber (1) according to at least one of claims 1 to 8, further comprising a filter device (12) for filtering ambient air at least prior to passing the sorption agent (4).

10. Processing chamber (1) according to at least one of claims 1 to 9, a heating element (9) for heating the sorption agent (4) is provided within the sorption cartridge (2), preferably outside but nearby the first compartment (3).

11. Processing chamber (1) according to at least one of claims 1 to 10, further comprising at least one of a temperature, humidity and pressure sensor (10), respectively, arranged at least one of within the sorption cartridge (2), the first compartment (3) and second compartment (11), respectively.

12. Processing chamber (1) according to at least one of claims 1 to 11, further comprising a carrier mechanism for exchangeably holding the sorption cartridge (2).

13. Processing chamber (1) according to claim 12, the carrier mechanism comprising a connector interface, comprising at least one connector interacting with at least one counterpart connector of the sorption cartridge (2), the connector interface being designed for at least one of mechanical interaction and unidirectionally or bidirectionally transferring at least one of ambient air, energy, sensor electric signals and control signals.

14. Device for household and industrial application, respectively, comprising a processing chamber (1) according to at least one of claims 1 to 13, the device preferably constituting an oven, in particular a cooking oven.

15. Sorption cartridge (2) comprising a sorption agent (4) accommodated therein and comprising at least one counterpart connector adapted for interacting with a connector of connector interface of processing chamber according to claim 13.
